# EUROPÄISCHE PATENTSCHRIFT

(11) **EP 3 035 771 B1**
(45) Veröffentlichungstag und Bekanntmachung des Hinweises auf die Patenterteilung: **29.04.2020**
(21) Anmeldenummer: 15185985.7
(22) Anmeldetag: 21.09.2015
(51) Int. Cl.: H05B 3/14, B60N 2/56, H01B 1/20, H05B 3/34

(54) **ELEKTRISCH LEITFÄHIGES POLYMERES FLÄCHENGEBILDE**
ELECTRICALLY CONDUCTIVE POLYMERIC FABRIC
STRUCTURES PLATES EN POLYMERE ELECTROCONDUCTRICES

(30) Priorität: 17.12.2014 DE 102014226210
(43) Veröffentlichungstag der Anmeldung: 22.06.2016
(73) Patentinhaber: ContiTech AG, 30165 Hannover (DE)
(72) Erfinder: Wietzke, Steffen, 31275 Lehrte (DE); Borvitz, Dieter, 30519 Hannover (DE); Lorenz, Corinna, 38106 Braunschweig (DE)
(74) Vertreter: Preusser, Andrea

(56) Entgegenhaltungen:
- EP-A2- 2 806 709
- DE-A1-102011 101 579

## Beschreibung

Die vorliegende Erfindung betrifft ein elektrisch leitfähiges polymeres Flächengebilde umfassend eine elektrisch leitfähige Elastomerlage aus einem Polymermaterial und wenigstens einem elektrisch leitfähigen Füllstoff, wobei zumindest eine metallische elektrische Leitung durch wenigstens eine Vermittlerschicht elektrisch mit der Elastomerlage verbunden ist. Die Erfindung betrifft ferner ein Verfahren zur Erzeugung eines elektrisch leitfähigen polymeren Flächengebildes sowie die Verwendung einer Vermittlerschicht zum Verbinden der metallischen elektrischen Leitung mit der Elastomerlage.

Auf Polymeren basierende elektrisch leitfähige Flächengebilde gehören beispielsweise als beheizbare Oberflächen zum Stand der Technik und stehen im Falle von zum Beispiel Sitzheizungen heutzutage bei vielen Kraftfahrzeugen kurz vor der Einführung als serienmäßige Ausstattung. Dabei werden neben elektrischen Heizsystemen, die sich nicht in einem festen Verbund mit dem darüber liegenden Dekor- und Sitzfläche aus z. B. textilem Material, Leder oder Kunstleder befinden, auch direkt beheizbare Dekormaterialen eingesetzt, die eine integrierte elektrische Heizfunktion besitzen. Neben der Anwendung als Heizung können solche Elemente natürlich auch als Sensoren, Schalter, Antennen etc. eingesetzt werden.

So beschreibt beispielsweise EP 2 806 709 A2, dass eine leitfähige Verbindung zwischen einer Elektrode und einer Schicht aus leitfähigem Kunststoffmaterial durch eine elektrisch leitfähige, aushärtbare polymere Paste erfolgt, welche dreidimensional verzweigte, leitfähige, dendritisch ausgebildete Partikel aufweist. In DE 10 2011 101579 A1 wiederum wird ein leitfähiges Elastomer bereitgestellt, welches leitfähige Feststoffpartikel enthält, wobei als Leitfähigkeitsteilchen blättchenförmige leitfähige Teilchen und/oder dendritisch leitfähige Teilchen und/oder andere längliche leitfähige Teilchen mit einem bestimmten Verhältnis Länge zu Breite vorhanden sein müssen.

In allen Fällen ist es aber notwendig, eine elektrische Kontaktierung zu einer Spannungsquelle herzustellen. Insbesondere wenn hohe Ströme wie im Falle einer Heizfunktion transportiert werden müssen, kommt der Fehlerfreiheit der Kontaktierung zwischen Zuleitungselektroden und dem elektrisch heizbaren Flächenmaterial eine entscheidende Bedeutung zu, und zwar über die gesamte Nutzungsdauer der Heizung.

Zur Realisierung der Kontaktierung von Heizelementen sind eine Vielzahl von Möglichkeiten vorgeschlagen und realisiert worden.

Zum elektrischen und zugleich physischen Verbinden von elektrisch leitfähigen Elastomerlagen mit einer elektrischen Zuleitung ist der Einsatz von Silber- oder Graphitleitpaste beziehungsweise Silber- oder Graphitlack bekannt (H. Clausert, G. Wiesemann, Grundgebiete der Elektrotechnik 1. 4. ed. 1990, München: Oldenbourg). Soll der elektrische Durchgangs- oder Oberflächenwiderstand von Prüfkörpern repräsentativ ohne großen Einfluss der Kontaktwiderstände an den Elektroden gemessen werden (u. a. isolierende Vulkanisationshaut), kommen so genannte Haftelektroden zum Einsatz. ISO 2878:2005 beschreibt für Elastomerproben mit einem elektrischen Widerstand von R < 3.10⁸ Ω eine Kontaktierung über zwei serielle Elektroden. Haftelektroden aus leitfähigen Suspensionen, die direkt auf die Oberfläche aufgebracht werden, beispielsweise durch Tauchen, Drucken, Malen, Streichen, Sprühen oder Gießen, gewährleisten den Stromeintrag in die Elastomerprobe.

Zudem wurden Haftelektroden aus Graphit (M. Knite et al., Polyisoprene-carbon black nanocomposites as tensile strain and pressure sensor materials; Sensors and Actuators A: Physical, 110(1-3), 142, 2004) oder einer 200 nm dünnen Goldschicht (L. Flandin, A. Hiltner, E. Baer, Interrelationships between electrical and mechanical properties of a carbon black-filled ethylene-octene elastomer; Polymer 42(2), 827, 2001) vorgeschlagen. Den Übergang zur Zuleitung bilden flächige Abnahmeelektroden, z. B. aus Messing. Entscheidend ist außerdem ein ausreichend guter mechanischer Kontakt. Dafür ist ein Anpressen mit einem Druck von mindestens 10 kPa erforderlich (R. H. Norman, Conductive Rubber & Plastics; 1970; Elsevier).

Klemmverbindungen oder das Auftragen von Silberlack sind jedoch fertigungs- und anwendungs-technisch nicht praktikabel im Vergleich zu eingebetteten (z. B. einvulkanisierten) Zuleitungen. Diese Zuleitungen weisen jedoch geometrie- und materialabhängig zum Teil hohe Kontaktwiderstände auf, was für eine optimale Funktionstüchtigkeit als unbefriedigend angesehen wird.

Die DE 4233118 schlägt zur Vermeidung hoher Übergangswiderstände zwischen einem elektrisch leitfähigen Gewebe und den Kontaktdrähten eine innige Verbindung zu den Kontaktdrähten durch Einweben in das Gewebe vor, so dass eine Vielzahl einzelner Kontaktstellen resultiert. Der Übergang des über die eingewebten Kontaktdrähte eingespeisten Stromes in die elektrisch leitfähige Fläche ist durch die Vielzahl an Kontaktstellen jedoch nicht homogen. Zudem ist durch das Einweben der Kontaktdrähte die Position der Anschlusselektroden festgelegt.

Prinzipiell auf der Oberfläche nicht sichtbar sind auch Kontaktierungen, die ein Anlöten der Anschlusselektroden auf dem elektrisch leitfähigen Flächengebilde beinhalten. So schlägt die DE 20 2005 010011 U1 vor, elektrisch leitfähige, beschichtete Flächengebilde im Anschlussbereich gezielt durch eine metallische Schicht zu verstärken, um dort eine stabile Lötverbindung herstellen zu können. Solche Lötverbindungen haben jedoch, wie auch das Verkleben der Anschlusselektroden mit einem handelsüblichen Kontaktierungskleber, der in der Regel durch Vernetzung ausgehärtet wird, den Nachteil, dass die entstandene Verbindung bei guter Ausführung der Kontaktierung zwar innig ist, aber wegen der Starrheit kaum dauerhaft flexiblen Belastungen widerstehen kann.

Die Aufgabe der vorliegenden Erfindung bestand darin, ein elektrisch leitfähiges polymeres Flächengebilde mit einer elektrisch leitfähigen Elastomerlage und einer damit gekoppelten metallischen elektrischen Leitung zur Verfügung zu stellen, bei dem der elektrische Übergangswiderstand von der metallischen Leitung zu der Elastomerlage verringert ist. Zudem soll die geschaffene Kontaktstelle auch physikalischen Belastungen standhalten.

Diese Aufgabe wird gelöst durch ein elektrisch leitfähiges polymeres Flächengebilde umfassend eine elektrisch leitfähige Elastomerlage aus einem Polymermaterial und wenigstens einem elektrisch leitfähigen Füllstoff, wobei zumindest eine metallische elektrische Leitung durch wenigstens eine Vermittlerschicht elektrisch mit der Elastomerlage verbunden ist, das dadurch gekennzeichnet ist, dass die Vermittlerschicht zumindest ein Matrixpolymer sowie auf 100 Gew.-Teile des Matrixpolymers
a) 1 bis 30 Gew.-Teile eines Leitrußes und
b) 0,1 bis 15 Gew.-Teile carbon nanotubes (Kohlenstoffnanoröhren, CNTs)
enthält.

Der vorliegenden Erfindung liegt die Erkenntnis zugrunde, dass durch die Verwendung der beiden erfindungsgemäß genannten unterschiedlichen elektrisch leitfähigen Füllstoffe a) und b) in der Vermittlerschicht ein guter elektrischer Kontakt zur elektrisch leitfähigen Elastomerlage einerseits und der metallischen elektrischen Leitung andererseits erzielt werden kann. Dadurch kann der Übergangswiderstand von der metallischen elektrischen Leitung zu der elektrisch leitfähigen Elastomerlage verringert werden. Dies ist beispielsweise dann von Bedeutung, wenn ein erfindungsgemäßes elektrisch leitfähiges polymeres Flächengebilde als elektrisch Widerstandsheizung, beispielsweise in einem Kraftfahrzeugsitz, verwendet wird, da die über das gesamte Bauteil abfallende Betriebsspannung im Wesentlichen über den Innenwiderstand der elektrisch leitfähigen Elastomerlage abfällt und nur ein geringer Teil an den Kontaktstellen zwischen der elektrischen Leitung und der Vermittlerschicht beziehungsweise der Vermittlerschicht und der Elastomerlage. Dadurch wird nicht nur die zum Betreiben des Bauteils aufgewendete elektrische Energie effizienter genutzt, sondern es kann hierdurch auch eine thermische Überbeanspruchung der Anschlussstellen verhindert werden, da durch lokale Überhitzungen ("Hot Spots") ein Durchbrennen oder eine Unterbrechung der elektrischen Zuleitung auftreten kann.

Die metallische elektrische Leitung kann im Rahmen der vorliegenden Erfindung jede an sich bekannte Ausgestaltung besitzen. In vorteilhafter Weise ist die elektrische Leitung als bandförmig-flache oder flächige Elektrode ausgebildet. Dies ist von Vorteil, weil auf diese Weise eine größere Kontaktfläche geschaffen wird, über die der elektrische Strom in die elektrisch leitfähige Elastomerlage fließen kann. Durch die Verwendung von bandförmigen Anschlusselektroden, wobei die in den Elektroden enthaltenden leitfähigen Litzen, Drähte oder Fasern in Anzahl und Leitungsquerschnitt entsprechend der DIN VDE 0100, Teil 520 so ausgelegt sind, dass die in der späteren Anwendung fließenden Ströme problemlos ohne Aufheizen aufgenommen werden können, lässt sich eine sichere Stromzufuhr erreichen.

Durch die Art der Erfindung können die Anschlusselektroden beinahe beliebig auf der elektrisch leitfähigen Fläche positioniert werden. Bevorzugt aber nicht unbedingt notwendig ist dabei eine parallele Anordnung der Elektroden.

Die metallische elektrische Leitung oder die vorgenannte Elektrode kann aus Einzelfilamenten gebildet sein, die insbesondere miteinander verflochten, verwoben oder verwirkt oder als Gelege angeordnet sind. Hierdurch wird eine höhere Flexibilität der elektrischen Leitung beziehungsweise der Elektrode erreicht, so dass mechanischen Verformungen der Elastomerlage besser gefolgt werden kann.

Die metallische elektrische Leitung kann im Prinzip aus jedem an sich hierfür geeigneten Material aufgebaut sein. Hierfür kommen beispielsweise Metalle wie Aluminium, Kupfer, Silber, Gold beziehungsweise vergoldete Metalle oder auch Edelstahl infrage. Um die Kompatibilität zwischen der metallischen elektrischen Leitung und der Vermittlerschicht zu verbessern, kann es zweckmäßig sein, bei der Verwendung von Kupfer für die elektrische Leitung dieses zumindest im unmittelbaren Kontaktbereich zu der Vermittlerschicht zu verzinnen, da Kupfer bei der Verwendung bestimmter Kautschukmaterialien deren chemische Stabilität beeinflussen kann.

In weiterer Ausgestaltung der Erfindung können die metallische elektrische Leitung oder auch deren Einzelfilamente jeweils mit der Vermittlerschicht umgeben sein. Hierunter wird verstanden, dass die elektrische Leitung oder die Einzelfilamente zumindest in dem Abschnitt der metallischen elektrischen Leitung, der für die Verbindung mit der Elastomerlage vorgesehen ist, jeweils einzeln mit der Vermittlerschicht umhüllt sind. Dies ist von Vorteil, weil bei dieser Ausgestaltung die elektrischen (Zu- beziehungsweise Ab-) Leitungen direkt mit der Elastomerlage verschweißt oder vulkanisiert werden kann. Die Umhüllung kann beispielsweise durch Tauchen, Drucken, Malen, Streichen, Sprühen oder Gießen mit einer Zusammensetzung der Vermittlerschicht aufgebracht werden.

In weiterer Ausgestaltung des erfindungsgemäßen Flächengebildes kann die Vermittlerschicht auch als durchgehendes flächiges Element ausgebildet sein, also beispielsweise als Folie. Diese kann dann bei der Herstellung des erfindungsgemäßen Flächengebildes zwischen die metallische elektrische Leitung und der Elastomerlage positioniert werden, wobei diese Bauteile anschließend durch Verschweißen oder Vulkanisieren oder andere Fügungstechniken miteinander verbunden werden. Eine solche Vermittlerschicht kann beispielsweise dadurch erzeugt werden, dass ihre Einzelkomponenten zunächst miteinander vermischt werden, beispielsweise in einem Innenkneter. Anschließend kann aus der so erhaltenen Mischung die Vermittlerschicht, beispielsweise mithilfe eines Kalanders, in gewünschter Dicke hergestellt werden.

Erfindungsgemäß besteht die Komponente b) des Flächengebildes aus Carbon Nanotubes (Kohlenstoff-Nanoröhren, CNTs). Dies ist besonders vorteilhaft, da bei der Verwendung von Carbon Nanotubes eine besonders gute elektrische Anbindung an die metallisch elektrische Leitung erzielt werden kann, was sich in einem entsprechend niedrigen Kontaktwiderstand bemerkbar macht.

Der elektrisch leitfähige Füllstoff der Elastomerlage kann gleich oder unabhängig von dem Leitruß der Vermittlerschicht ausgewählt sein aus der Gruppe umfassend oder bestehend aus Leitruß, Metall und Metallverbindungen (z. B. Oxide, Nitride, Karbide, Boride), leitfähig beschichtete Partikel (z. B. mit Silber), leitfähiger Keramik, Halbleiter oder Mischungen von diesen. Dabei ist die Verwendung von Leitrußen besonders bevorzugt, da diese bei relativ geringem Füllgrad eine gute elektrische Leitfähigkeit vermitteln ohne, dass das Polymermaterial zu stark zur Versprödung neigt.

Die Elastomerlage und die Vermittlerschicht können zudem unabhängig voneinander auch Antistatika und/ oder weitere Leitfähigkeitsadditive enthalten, wie ionische Flüssigkeiten. Der Anteil an Antistatika kann beispielsweise 0,1, bis 50 Gew.-% und der Anteil an ionischen Flüssigkeiten 0,1 bis 50 Gew.-% jeweils bezogen auf das Gesamtgewicht der Elastomerlage beziehungsweise der Vermittlerschicht.

Nach einer besonders bevorzugten Ausführungsform des erfindungsgemäßen Flächengebildes ist der elektrisch leitfähige Füllstoff der Elastomerlage mit dem Leitruß der Vermittlerschicht identisch.Dies ist von Vorteil, weil hierdurch der Kontaktwiderstand zwischen der Vermittlerschicht und der Elastomerlage weiter reduziert werden kann.

Erfindungsgemäß enthält die Komponente a) 1 bis 13 Gew.-Teile Leitruß und die Komponente b) 0,1 bis 15 Gew.-Teile carbon nanotubes. Dies ist von Vorteil, weil eine Vermittlerschicht dieser Zusammensetzung durch die Verwendung von carbon nanotubes einen sehr geringen Kontaktwiderstand zu dem metallisch elektrischen Leiter zeigt. Auf der Grenzfläche zur Elastomerlage wird durch die Verwendung von Leitrußen ebenfalls ein geringer elektrischer Kontaktwiderstand erreicht, insbesondere dann, wenn in der Elastomerlage ebenfalls Leitruße als elektrisch leitfähige Partikel eingesetzt werden. Die Kombination von Leitrußen und Carbon Nanotubes in der Vermittlerschicht ist zudem von Vorteil, da die Leitruße zu einer guten "Grundleitfähigkeit" der Vermittlerschicht führen ohne dabei die Vermittlerschicht zu sehr zu verspröden.

In Weiterbildung des erfindungsgemäßen Flächengebildes ist das Polymermaterial der Elastomerlage und das Matrixpolymer der Vermittlerschicht unabhängig voneinander ausgewählt aus der Gruppe umfassend oder bestehend aus Ethylen-Propylen-Mischpolymerisat (EPM), Ethylen-Propylen-Dien Mischpolymerisat (EPDM), Nitrilkautschuk (NBR), (teil)hydrierter Nitrilkautschuk (HNBR), Fluor-Kautschuk (FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CHR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Silikonkautschuk (MVQ), Fluorierter Methylsiliconkautschuk (MFQ), Perfluorierter Propylen-Kautschuk (FFPM), Perfluorocarbon-Kautschuk (FFKM), Polyurethan (PU), sowie Copolymeren und/ oder Mischungen von diesen.

Bei dem erfindungsgemäßen Flächengebilde kann weiterhin vorgesehen sein, dass die metallisch elektrische Leitung und / oder die Vermittlerschicht auf ihre der Elastomerlage abgewandten Seite mit einer isolierenden Deckschicht versehen ist.

Es ist ferner bevorzugt, dass das Polymermaterial der Elastomerlage, das Matrixpolymer der Vermittlerschicht und/ oder die isolierende Deckschicht ein identisches Polymer enthalten, da hierdurch eine besonders gute mechanische Anbindung der Schichten untereinander erreicht werden kann.

Die Elastomerlage kann einseitig oder auf ihren beiden gegenüberliegenden Flachseiten mit jeweils wenigstens einer metallischen elektrischen Leitung durch jeweils wenigstens eine Vermittlerschicht verbunden sein. Auf diese Weise kann die elektrische Energie über eine größere Fläche in die Elastomerlage eingespeist werden, wodurch die Gefahr der Bildung von "Hot Spots" durch punktuelle Überhitzung verhindert wird.

Das erfindungsgemäße Flächengebilde ist zweckmäßigerweise mit wenigstens zwei metallischen elektrischen Leitungen jeweils über eine Vermittlerschicht verbunden, wobei sich diese metallischen Leitungen beispielsweise bei der Verwendung als Widerstandsheizung zweckmäßigerweise an gegenüberliegenden Enden des polymeren Flächengebildes befinden, damit der elektrische Strom das Flächengebilde auf seiner gesamten Länge durchfließt.

Das polymere Flächengebilde kann weiterhin auch mechanische Verstärkungen enthalten, wenn diese gewünscht ist. Hierfür kommen beispielsweise Armierungen in Form von Geweben, Gelegen, Fliesen oder Gewirke in Betracht. Diese können beispielsweise aus Kunststofffasern oder Glasfasern aufgebaut sein, wie beispielsweise Aramid oder Nylon.

Das erfindungsgemäße elektrisch leitfähige polymere Flächengebilde kann beispielsweise als elektrisch betriebenes Widerstandsheizelement verwendet werden, speziell im Kraftfahrzeugbereich. Konkrete Anwendungsgebiete sind beispielsweise die Verwendung des Flächengebildes als Sitzheizungselement, in einer Heizdecke oder aber auch als beheizbares Element, das für den Bezug von Fahrzeuginnenoberflächen Verwendung finden kann, wie beispielsweise Armaturenbretter, Türverkleidungen, Dachhimmel oder dergleichen. Als weitere Anwendungen kommen Stromtransport und Sensorik in Betracht oder andere Anwendungen elektrisch funktionalisierter Elastomere.

Ein weiterer Gegenstand der vorliegenden Erfindung betrifft ein Verfahren zur Erzeugung eines elektrisch leitfähigen polymeren Flächengebildes umfassend eine elektrisch leitfähige Elastomerlage aus einem Polymermaterial und wenigstens einem elektrisch leitfähigen Füllstoff, wobei zumindest eine metallische elektrische Leitung durch wenigstens eine Vermittlerschicht elektrisch mit der Elastomerlage verbunden wird, wobei das Verfahren dadurch gekennzeichnet ist, dass die Vermittlerschicht zumindest ein Matrixpolymer sowie auf 100 Gew.-Teile des Matrixpolymers
a) 1 bis 30 Gew.-Teile eines Leitrußes und
b) 1 bis 10 Gew.-Teile carbon nanotubes
enthält.

In Weiterbildung dieses Verfahrens kann vorgesehen sein, dass das die Verbindung der Elastomerlage mit der metallischen elektrischen Leitung durch die Vermittlerschicht mittels Verschweißen, Vulkanisation oder Kraftschluss erfolgt.

Ein weiterer Gegenstand der vorliegenden Erfindung ist die Verwendung einer Zusammensetzung enthaltend zumindest ein Matrixpolymer sowie auf 100 Gew.-Teile des Matrixpolymers
a) 1 bis 30 Gew.-Teile eines Leitrußes und
b) 1 bis 10 Gew.-Teile carbon nanotubes
als Vermittlerschicht zum Verbinden zumindest einer metallischen elektrischen Leitung mit einer elektrisch leitfähigen Elastomerlage umfassend ein Polymermaterial und wenigstens einen elektrisch leitfähigen Füllstoff.

Die vorliegende Erfindung wird im Folgenden anhand von Ausführungsbeispielen und den Figuren 1 bis 4 näher erläutert. Darin zeigt
- Fig. 1: den Herstellungsprozess einer ersten Ausführungsform des erfindungsgemäßen Flächengebildes,
- Fig. 2: eine zweite Ausführungsform des erfindungsgemäßen Flächengebildes,
- Fig. 3: eine dritte Ausführungsform des erfindungsgemäßen Flächengebildes, sowie
- Fig. 4: eine Rasterelektronen-mikroskopische Aufnahme der Grenzfläche zwischen Vermittlerschicht und metallischer Leitung nach Entfernung letzterer.

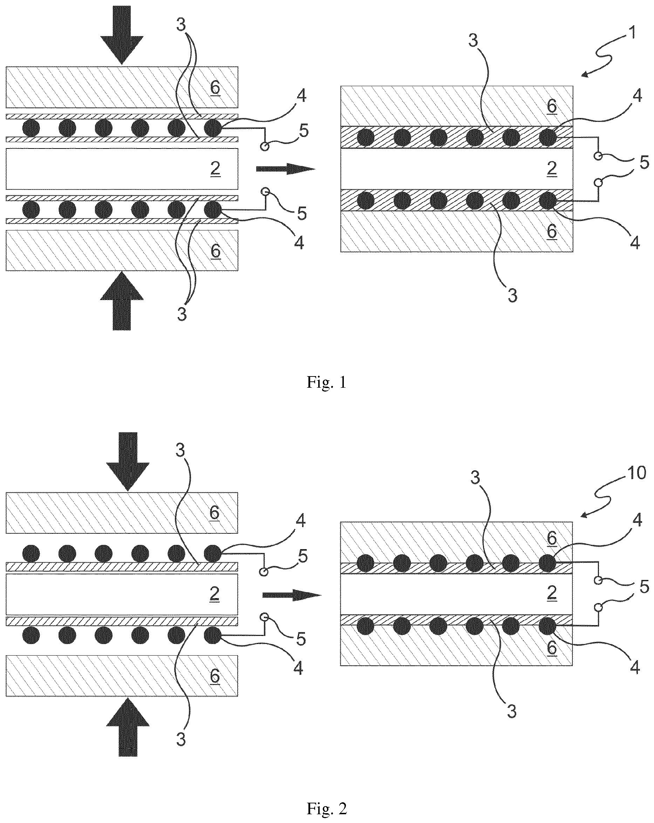

In Fig. 1 ist eine erste Ausführungsform eines erfindungsgemäßen Flächengebildes 1 abgebildet. Das Flächengebilde 1 umfasst eine elektrisch leitfähige Elastomerlage 2 aus einem Polymermaterial auf Fluorkautschuk-Basis (FKM-Kautschuk = Copolymer aus Hexafluoropropylen und Vinyliden-Fluorid, Mooney-Viskosität: ML (1+10, 121 °C) = 22), das 15 Gew.-Teile Leitruß bezogen auf 100 Gew.-Teile Polymermaterial enthält (Ensaco 260G, Firma Timcal). Die Elastomerlage 2 besitzt einen spezifischen Widerstand von ca. 5 Ωm (bestimmt in Anlehnung an die VDE-Richtlinie 0303 und DIN 53483).

Auf den beiden Flachseiten ist die Elastomerlage 2 über eine Vermittlerschicht 3 mit einer metallischen elektrischen Leitung 4 in Form einer Flachelektrode bestehend aus einem verzinnten Kupfergeflecht elektrisch mit einer Spannungsquelle 5 verbunden. Die Vermittlerschicht 3 besteht aus demselben Fluorkautschuk wie die Elastomerlage 2 und ist mit 5 Gew.-Teilen Leitruß (Ensaco 260G, Firma Timcal) als Komponente a) und 2 Gew.-Teilen CNTs (NC7000, Fa. Nanocyl) als Komponente b) gefüllt, jeweils bezogen auf 100 Gew.-Teile Kautschuk. Die Dicke der Elektrode beträgt 0,5 mm, wobei die auf jeder Seite der Elastomerlage 2 mit den Elektroden überdeckte Fläche etwa 25 mal 25 mm² entspricht.

Die Vermittlerschichten 3 sind auf ihren der Elastomerlage 2 abgewandten Flachseiten jeweils mit einer isolierenden Deckschicht 6 aus demselben Fluorkautschuk wie die Elastomerlage 2 versehen, die eine Dicke von 1,5 mm aufweist.

Die Herstellung des erfindungsgemäßen leitfähigen polymeren Flächengebildes 1 erfolgt dadurch, dass die Elektroden 4 jeweils beidseitig mit dem Material der Vermittlerschicht 3 in Form einer Folie abgedeckt werden. Die Vermittlerschicht 3 wird erzeugt, indem ihre Einzelkomponenten zunächst in einem Innenmischer miteinander vermischt werden. Anschließend wird aus der so erhaltenen Mischung die Vermittlerschicht 3 mithilfe eines Kalanders in gewünschter Dicke hergestellt.

Die Elastomerlage 2 wird dann Sandwich-artig von den so abgedeckten Elektroden 4 umgeben und die Vermittlerschicht 3 auf ihren der Elastomerlage 2 abgewandten Seiten jeweils mit der isolierenden Deckschicht abgedeckt. Das so erzeugte Schichtengebilde wird anschließend unter Druck- und Hitzeeinwirkung bei mindestens 10000 hPa und 150 °C für einen Zeitraum von mindestens 45 min Minuten vulkanisiert. Bei diesem Prozess werden die Bauteile miteinander verbunden, wobei die jeweils oberhalb und unterhalb der Elektroden positionierten Vermittlerschichten 3 im Durchgriffbereich zu einer durchgehenden Vermittlerschicht 3 verschmelzen.

In Fig. 2 ist eine zweite Ausführungsform eines elektrisch leitfähigen polymeren Flächengebildes 10 dargestellt. Dieses unterscheidet sich im Aufbau von dem vorstehend diskutierten und in Fig. 1 dargestellten Flächengebilde 1 lediglich darin, dass die Elektroden 4 beim Herstellprozess nur auf ihrer der Elastomerlage 2 zugewandten Flachseite mit einer Vermittlerschicht 3 versehen werden. Mit anderen Worten wird hier die Elektrode 4 nur einseitig in die Vermittlerschicht 3 eingebettet.

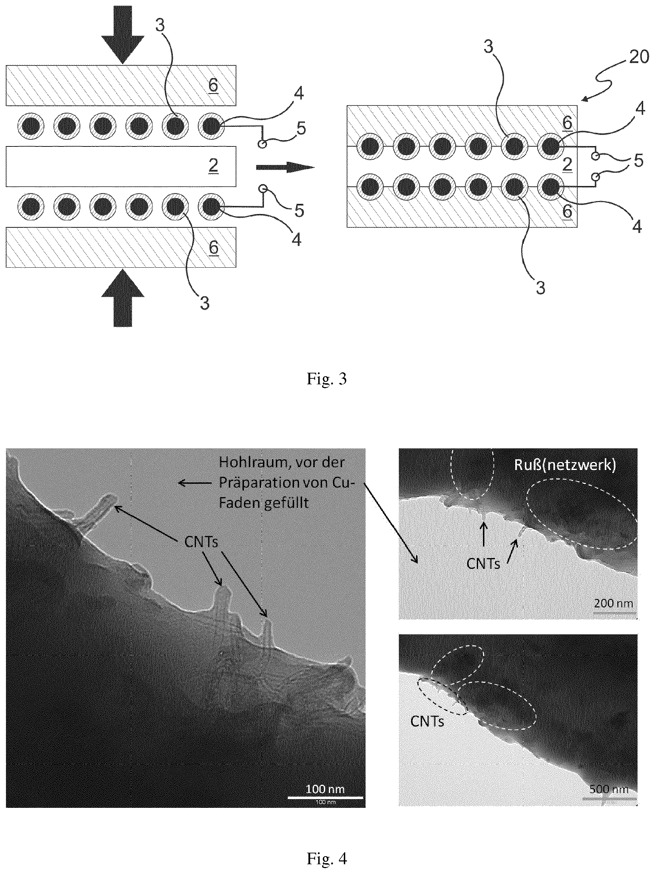

In Fig. 3 ist eine dritte Ausführungsform eines erfindungsgemäßen elektrisch leitfähigen Flächengebildes 20 dargestellt. Bei dieser Ausführungsform liegt die Vermittlerschicht 3 als Umhüllung der Filamente der Elektroden 4 vor, also im Unterschicht zu den in Fig. 1 und Fig. 2 dargestellten Ausführungsformen nicht als durchgehende Vermittlerschicht 3.

Der Effekt des erfindungsgemäßen Aufbaus wurde anhand einer Konstruktion gemäß Fig. 1 untersucht. Hierzu wurden die Durchgangswiderstände an erfindungsgemäßen Prüfkörpern mit solchen ohne Vermittlerschicht verglichen. Der Kontaktwiderstand wird mittels eines Multimeters bestimmt. Die Ergebnisse sind wie folgt:

| | |
|---|---|
| Durchgangswiderstand ohne Vermittlerschicht: | R_{ref} = 4,90 kΩ |
| Durchgangswiderstand mit Vermittlerschicht gemäß Fig. 1: | R_{CNT} = 0,38 kΩ |
| Durchgangswiderstand mit Vermittlerschicht gemäß Fig. 2: | R_{CNT} = 0,70 kΩ |

Der Durchgangswiderstand ohne Vermittlerschicht kann hierbei gleichzeitig auch als Vergleichsbeispiel für eine Vermittlerschicht herangezogen werden, die ausschließlich mit Leitruß gefüllt ist, da die Polymermatrix der Vermittlerschicht identisch mit derjenigen der Elastomerlage ist. Damit ist belegt, dass durch den Einsatz einer Kombination aus Leitruß und CNTs eine überraschend hohe Reduktion der Durchgangswiderstände erzielt werden konnte.

Als weiterer Vergleich wurde gemäß der aus dem Stand der Technik bekannten Methode die Kupferelektrode beidseitig mittels eines Silberlacks auf die Elastomerlage geklebt:

| | |
|---|---|
| Durchgangswiderstand mit Silberlackschicht: | R_{Ag} = 0,36 kΩ |

Bei diesem Schichtaufbau kommt es jedoch zu einer Delamination, da keine stoffschlüssige Verbindung zwischen der Elektrode und der Erlastomerlage erzielt wird. Dies liegt möglicherweise an dem fehlenden Durchgriff der Gummimatrix um die Litzen. Mit anderen Worten konnten mit einem hierzu prinzipiell vergleichbaren, weil beidseitig kontaktiertem, Schichtaufbau mit Vermittlerschicht nahezu dieselben geringen Widerstände wie bei der Verwendung eines Silberlacks erreicht werden. Dabei wird jedoch ein flexibler, mechanisch belastbarer Verbund geschaffen, der bei der Verwendung von Silberlack nicht erzielt werden kann.

In den folgenden Experimenten wurden die spezifischen Widerstände verschiedener Materialzusammensetzungen für die Vermittlerschicht untersucht. Hierzu wurde derselbe FKM-Kautschuk wie vorstehend zu Fig. 1 beschrieben mit den folgenden Anteilen an leitfähigen Füllstoffen versetzt und die spezifischen Widerstände in Anlehnung an die VDE-Richtlinie 0303 und DIN 53483 bestimmt. Die Einheit "phr" steht für "parts per hundred rubber" und gibt damit an, wie viele Gew.-Teile des angegebenen Füllstoffs auf 100 Gew.-Teile Elastomer zugesetzt wurden:

| | Leitruß - Ensaco 260G [phr] | CNTs - NC7000 [phr] | Spez. Widerstand [Ωm] |
|---|---|---|---|
| V1 (Vergl.) | 15 | - | 7,0 |
| V2 (erf.) | 5 | 0,5 | 9,0 |
| V3 (erf.) | 5 | 1,0 | 5,5 |
| V4 (erf.) | 5 | 1,5 | 2,0 |
| V5 (erf.) | 5 | 2,0 | 1,7 |
| V6 (erf.) | 5 | 2,5 | 1,3 |
| V7 (Vergl.) | - | 2,0 | > 10⁶ |

Die Ergebnisse zeigen, dass nur bei der Verwendung von Leitruß in Kombination mit CNTs die vorteilhafte Leitfähigkeitsverbesserung erzielbar ist.

Eine mögliche Erklärung für die Verringerung der Kontaktwiderstände kann die Fig. 4 liefern. In Fig. 4 sind rasterelektronenmikroskopische Aufnahmen der Phasengrenze zwischen der Vermittlerschicht gemäß der ersten Ausführungsform in Fig. 1 und dem metallischen Leiter gezeigt, nachdem der Leiter wieder entfernt wurde. In der Aufnahme ist zu erkennen, dass die CNTs im Gegensatz zu dem Rußnetzwerk bis an die Oberfläche der Vermittlerschicht reichen und zum Teil sogar aus dieser heraus ragen. Damit schlagen die CNTs anscheinend die Brücke zum Rußnetzwerk, das mit etwas Abstand zur Ober-/Grenzfläche dahinter liegend zu erkennen ist. Hierdurch wird möglicherweise eine bessere Kontaktierung zum metallischen Leiter erzielt. Dies kann eine mögliche Erklärung für die deutliche Leitfähigkeitsverbesserung beziehungsweise die Widerstandsreduktion an dieser Phasengrenze darstellen.

### Bezugszeichenliste

- 1: Elektrisch leitfähiges polymeres Flächengebilde
- 2: elektrisch leitfähige Elastomerlage
- 3: Vermittlerschicht
- 4: metallische elektrische Leitung
- 5: Spannungsquelle
- 6: Isolierende Deckschicht
- 10: Elektrisch leitfähiges polymeres Flächengebilde
- 20: Elektrisch leitfähiges polymeres Flächengebilde

## Patentansprüche

1. Elektrisch leitfähiges polymeres Flächengebilde (1, 10, 20) umfassend eine elektrisch leitfähige Elastomerlage (2) aus einem Polymermaterial und wenigstens einem elektrisch leitfähigen Füllstoff, wobei zumindest eine metallische elektrische Leitung (4) durch wenigstens eine Vermittlerschicht (3) elektrisch mit der Elastomerlage (2) verbunden ist,
**dadurch gekennzeichnet, dass**
die Vermittlerschicht (3) zumindest ein Matrixpolymer sowie auf 100 Gew.-Teile des Matrixpolymers
a) 1 bis 30 Gew.-Teile Leitruß und
b) 0,1 bis 15 Gew.-Teile carbon nanotubes
enthält.

2. Flächengebilde nach Anspruch 1, **dadurch gekennzeichnet, dass** die metallische elektrische Leitung (4) als bandförmig-flache oder flächige Elektrode ausgebildet ist.

3. Flächengebilde nach Anspruch 1 oder 2, **dadurch gekennzeichnet, dass** die metallische elektrische Leitung (4) oder die Elektrode aus Einzelfilamenten gebildet ist, die insbesondere miteinander verflochten, verwoben oder verwirkt oder als Gelege angeordnet sind.

4. Flächengebilde nach einem der vorstehenden Ansprüche, **dadurch gekennzeichnet, dass** die metallische elektrische Leitung (4) oder deren Einzelfilamente jeweils mit der Vermittlerschicht (3) umgeben sind.

5. Flächengebilde nach einem der vorstehenden Ansprüche, **dadurch gekennzeichnet, dass** die Vermittlerschicht (3) als durchgehendes flächiges Element ausgebildet ist.

6. Flächengebilde nach einem der vorstehenden Ansprüche, **dadurch gekennzeichnet, dass** die Vermittlerschicht (3) auf 100 Gew.-Teile des Matrixpolymers
a) 2 bis 20 Gew.-Teile Leitruß, insbesondere 2,5 bis 10 Gew.-Teile, und
b) 0,5 bis 15 Gew.-Teile carbon nanotubes, insbesondere 1 bis 5 Gew.-Teile,
enthält.

7. Flächengebilde nach einem der vorstehenden Ansprüche, **dadurch gekennzeichnet, dass** sich bei der Vermittlerschicht (3) das Matrixpolymer, die Komponente a) und die Komponente b) auf 90 bis 100 Gew.-% bezogen auf das Gesamtgewicht der Vermittlerschicht (3) ergänzen, insbesondere auf 95 bis 100 Gew.-%.

8. Flächengebilde nach einem der vorstehenden Ansprüche, **dadurch gekennzeichnet, dass** die metallische elektrische Leitung (4) und/ oder die Vermittlerschicht (3) auf ihrer der Elastomerlage (2) abgewandten Seite mit einer isolierenden Deckschicht (6) versehen ist.

9. Flächengebilde nach einem der vorstehenden Ansprüche, **dadurch gekennzeichnet, dass** die Elastomerlage (2) auf ihren beiden Flachseiten jeweils mit wenigstens einer metallischen elektrischen Leitung (4) durch jeweils wenigstens eine Vermittlerschicht (3) verbunden ist.

10. Verfahren zur Erzeugung eines elektrisch leitfähigen polymeren Flächengebildes (1, 10, 20) umfassend eine elektrisch leitfähige Elastomerlage (2) aus einem Polymermaterial und wenigstens einem elektrisch leitfähigen Füllstoff, wobei zumindest eine metallische elektrische Leitung (4) durch wenigstens eine Vermittlerschicht (3) elektrisch mit der Elastomerlage (2) verbunden wird, **dadurch gekennzeichnet, dass**
die Vermittlerschicht (3) zumindest ein Matrixpolymer sowie auf 100 Gew.-Teile des Matrixpolymers
a) 1 bis 30 Gew.-Teile Leitruß und
b) 1 bis 10 Gew.-Teile carbon nanotubes
enthält.

11. Verwendung eines Flächengebildes (1, 10, 20) nach einem der Ansprüche 1 bis 10 als Sitzheizungselement, in einer Heizdecke, als beheizbares Element für den Bezug von Fahrzeuginnenoberflächen, als elektrischer Leiter für den Stromtransport oder im Bereich der Sensorik.

12. Verwendung einer Zusammensetzung enthaltend zumindest ein Matrixpolymer sowie auf 100 Gew.-Teile des Matrixpolymers
a) 1 bis 30 Gew.-Teile Leitruß und
b) 1 bis 10 Gew.-Teile carbon nanotubes
als Vermittlerschicht (3) zum Verbinden zumindest einer metallischen elektrischen Leitung (4) mit einer elektrisch leitfähigen Elastomerlage (2) umfassend ein Polymermaterial und wenigstens einen elektrisch leitfähigen Füllstoff.

## Claims

1. Electrically conductive polymeric fabric (1, 10, 20) comprising an electrically conductive elastomer ply (2) made of a polymer material and at least one electrically conductive filler, wherein at least one metallic electrical conduit (4) is electrically connected to the elastomer ply (2) via at least one mediator layer (3),
**characterized in that**
the mediator layer (3) contains at least one matrix polymer and per 100 parts by weight of the matrix polymer
a) 1 to 30 parts by weight of conductivity carbon black and
b) 0.1 to 15 parts by weight of carbon nanotubes.

2. Fabric according to Claim 1, **characterized in that** the metallic electrical conduit (4) is in the form of a flat-ribbonlike or sheetlike electrode.

3. Fabric according to Claim 1 or 2, **characterized in that** the metallic electrical conduit (4) or the electrode is formed from individual filaments which are in particular braided, woven or knitted or are arranged in the form of a non-crimp fabric.

4. Fabric according to any of the preceding claims, **characterized in that** the metallic electrical conduit (4) or the individual filaments thereof are in each case surrounded by the mediator layer (3).

5. Fabric according to any of the preceding claims, **characterized in that** the mediator layer (3) is in the form of a continuous sheetlike element.

6. Fabric according to any of the preceding claims, **characterized in that** the mediator layer (3) contains per 100 parts by weight of the matrix polymer
(a) 2 to 20 parts by weight of conductivity carbon black, in particular 2.5 to 10 parts by weight, and
(b) 0.5 to 15 parts by weight of carbon nanotubes, in particular 1 to 5 parts by weight.

7. Fabric according to any of the preceding claims, **characterized in that** in the mediator layer (3) the matrix polymer, the component a) and the component b) sum to 90% to 100% by weight based on the total weight of the mediator layer (3), in particular to 95% to 100% by weight.

8. Fabric according to any of the preceding claims, **characterized in that** the metallic electrical conduit (4) and/or the mediator layer (3) is provided with an insulating outer layer (6) on the side thereof facing away from the elastomer ply (2).

9. Fabric according to any of the preceding claims, **characterized in that** on both of its flat sides the elastomer ply (2) is in each case connected to at least one metallic electrical conduit (4) via at least one mediator layer (3) in each case.

10. Process for producing an electrically conductive polymeric fabric (1, 10, 20) comprising an electrically conductive elastomer ply (2) composed of a polymer material and at least one electrically conductive filler, wherein at least one metallic electrical conduit (4) is electrically connected to the elastomer ply (2) via at least one mediator layer (3),
**characterized in that**
the mediator layer (3) contains at least one matrix polymer and per 100 parts by weight of the matrix polymer
a) 1 to 30 parts by weight of conductivity carbon black and
b) 1 to 10 parts by weight of carbon nanotubes.

11. Use of a fabric (1, 10, 20) according to any of Claims 1 to 10 as a seat heating element, in an electric blanket, as a heatable element for covering vehicle interior surfaces, as an electrical conductor for transmission of current or in the field of sensors.

12. Use of a composition containing at least one matrix polymer and per 100 parts by weight of the matrix polymer
a) 1 to 30 parts by weight of conductivity carbon black and
b) 1 to 10 parts by weight of carbon nanotubes
as a mediator layer (3) for connecting at least one metallic electrical conduit (4) with an electrically conductive elastomer ply (2) comprising a polymer material and at least one electrically conductive filler.

## Revendications

1. Structure plate polymère électriquement conductrice (1, 10, 20) comprenant une couche élastomère électriquement conductrice (2) en un matériau polymère et au moins une charge électriquement conductrice, au moins une conduite électrique métallique (4) étant raccordée électriquement avec la couche élastomère (2) par au moins une couche intermédiaire (3),
**caractérisée en ce que**
la couche intermédiaire (3) contient au moins un polymère de matrice, ainsi que, pour 100 parties en poids du polymère de matrice,
a) 1 à 30 parties en poids de noir de carbone conducteur et
b) 0,1 à 15 parties en poids de nanotubes de carbone.

2. Structure plate selon la revendication 1, **caractérisée en ce que** la conduite électrique métallique (4) est configurée sous la forme d'une électrode plate en forme de bande ou plate.

3. Structure plate selon la revendication 1 ou 2, **caractérisée en ce que** la conduite électrique métallique (4) ou l'électrode est formée par des filaments individuels, qui sont notamment entrelacés, tissés ou tricotés les uns avec les autres ou agencés en une nappe.

4. Structure plate selon l'une quelconque des revendications précédentes, **caractérisée en ce que** la conduite électrique métallique (4) ou ses filaments individuels sont à chaque fois entourés avec la couche intermédiaire (3).

5. Structure plate selon l'une quelconque des revendications précédentes, **caractérisée en ce que** la couche intermédiaire (3) est configurée sous la forme d'un élément plat continu.

6. Structure plate selon l'une quelconque des revendications précédentes, **caractérisée en ce que** la couche intermédiaire (3) contient, pour 100 parties en poids du polymère de matrice,
a) 2 à 20 parties en poids de noir de carbone conducteur, notamment 2,5 à 10 parties en poids, et
b) 0,5 à 15 parties en poids de nanotubes de carbone, notamment 1 à 5 parties en poids.

7. Structure plate selon l'une quelconque des revendications précédentes, **caractérisée en ce que** la somme du polymère de matrice, du composant a) et du composant b) dans la couche intermédiaire (3) est de 90 à 100 % en poids par rapport au poids total de la couche intermédiaire (3), notamment de 95 à 100 % en poids.

8. Structure plate selon l'une quelconque des revendications précédentes, **caractérisée en ce que** la conduite électrique métallique (4) et/ou la couche intermédiaire (3) sont munies d'une couche de recouvrement isolante (6) sur leur côté opposé à la couche élastomère (2).

9. Structure plate selon l'une quelconque des revendications précédentes, **caractérisée en ce que** la couche élastomère (2) est raccordée sur ses deux côtés plats avec à chaque fois au moins une conduite électrique métallique (4) à chaque fois par au moins une couche intermédiaire (3).

10. Procédé de formation d'une structure plate polymère électriquement conductrice (1, 10, 20) comprenant une couche élastomère électriquement conductrice (2) en un matériau polymère et au moins une charge électriquement conductrice, au moins une conduite électrique métallique (4) étant raccordée électriquement avec la couche élastomère (2) par au moins une couche intermédiaire (3),
**caractérisé en ce que**
la couche intermédiaire (3) contient au moins un polymère de matrice, ainsi que, pour 100 parties en poids du polymère de matrice,
a) 1 à 30 parties en poids de noir de carbone conducteur et
b) 1 à 10 parties en poids de nanotubes de carbone.

11. Utilisation d'une structure plate (1, 10, 20) selon l'une quelconque des revendications 1 à 10 en tant qu'élément de chauffage de siège, dans une couverture chauffante, en tant qu'élément chauffant pour le revêtement de surfaces intérieures de véhicules, en tant que conducteur électrique pour le transport de courant ou dans le domaine des capteurs.

12. Utilisation d'une composition contenant au moins un polymère de matrice, ainsi que, pour 100 parties en poids du polymère de matrice,
a) 1 à 30 parties en poids de noir de carbone conducteur et
b) 1 à 10 parties en poids de nanotubes de carbone,
en tant que couche intermédiaire (3) pour le raccordement d'au moins une conduite électrique métallique (4) avec une couche élastomère électriquement conductrice (2) comprenant un matériau polymère et au moins une charge électriquement conductrice.
